# EUROPÄISCHE PATENTSCHRIFT

(11) **EP 1 513 649 B1**
(45) Veröffentlichungstag und Bekanntmachung des Hinweises auf die Patenterteilung: **15.03.2006**
(21) Anmeldenummer: 04740593.1
(22) Anmeldetag: 02.07.2004
(51) Int. Cl.: B23Q 5/38, F16D 55/22, F16H 19/00

(54) **ZAHNSTANGENANTRIEB MIT BREMSEINHEIT**
RACK-AND-PINION DRIVE WITH BRAKE UNIT
DISPOSITIF D'ENTRAINEMENT A CREMAILLIERE AVEC UNITE DE FREINAGE

(30) Priorität: 04.07.2003 DE 10330307
(43) Veröffentlichungstag der Anmeldung: 16.03.2005
(73) Patentinhaber: Chr. Mayr GmbH & Co. KG, D-87665 Mauerstetten (DE)
(72) Erfinder: EBERLE, Johann, 87660 Irsee (DE); EIBAND, Karl, Marktoberdorf (DE); VOGT, Herbert, 87665 Mauerstetten (DE)
(74) Vertreter: Ruschke, Hans Edvard
(86) Internationale Anmeldenummer: PCT/EP2004/007242
(87) Internationale Veröffentlichungsnummer: WO 2005/002789

(56) Entgegenhaltungen:
- EP-A- 1 354 665
- DE-C- 4 313 900
- FR-A- 2 671 336
- GB-A- 2 130 682
- US-A- 4 600 358

## Beschreibung

Die vorliegende Erfindung betrifft eine Antriebsanordnung mit einer Bremseinheit für Zahnstangenantriebe nach dem Oberbegriff des Patentanspruches 1. Solche Zahnstangenantriebe kommen beispielsweise als Vertikalantriebe im allgemeinen Werkzeugmaschinenbau zur Anwendung, z. B. bei Werkzeugmaschinen in Portalbauweise.
Eine Antriebsanordnung mit den Merkmalen des Oberbegriffs von Anspruch 1 ist aus der GB-A-2 130 682 bekannt.

Wenn ein Zahnstangenantrieb im Zusammenhang mit einer vertikalen Verschiebung eines Werkzeugmaschinenschlittens zum Einsatz kommt, dann ist der Schlitten mit einem Antriebsmotor mit einem Ritzel versehen, welches in die senkrecht verlaufende Zahnstange eingreift und somit den Schlitten in senkrechter Richtung verstellt. Auf der rückwärtigen, von der Zahnstange abgewandten Seite des Antriebsmotors an ihrem B-Lager wird im Stand der Technik eine elektromagnetische Ruhestrornbremse eingesetzt, die also beim Wegbleiben des Stromes aufgrund von Dnickfedern einfällt und so den Schlitten in der gerade erreichten vertikalen Stellung des Schlittens festhält.

Aus Sicherheitsgründen wird im Stand der Technik vorgesehen, daß an dem Schlitten zusätzlich noch eine sogenannte Absteckvorrichtung vorgesehen ist, d.h. der Schlitten kann zusätzlich in seiner jeweiligen vertikalen Position mit Hilfe eines manuell einsetzbaren und in die Zahnstange eingreifenden Bolzens fixiert werden, damit der Schlitten z. B. bei einer Fehlbedienung oder Fehlschaltung oder beim Versagen der Motorbremse nicht abstürzen kann, z. B. dann, wenn die Bedienungsperson unterhalb des Schlittens irgendwelche Einrichtarbeiten auszuführen hat.

Diese bekannte Absteckvorrichtung als zusätzliche Sicherheit ist zumindest vom Arbeitsaufwand nicht befriedigend, weil sie von Hand aktiviert werden muß, d.h. wann immer Montagearbeiten unterhalb des Schlittens ausgeführt werden müssen, muß die Bedienungsperson zuvor auf das Portal steigen, um die Absteckvorrichtung zu aktivieren bzw. nach Beendigung der Montagearbeiten wieder zu lösen. Aufgrund einschlägiger Sicherheitsvorschriften ist es nicht möglich bzw. zulässig, ohne eine solche zusätzliche Sicherheitsanordnung zu arbeiten. Damit soll die Bedienungsperson vor schweren körperlichen Schäden aufgrund von irgendwelchen unvorhergesehenen Ereignissen bewahrt werden.

Hiernach ist es die der vorliegenden Erfindung zugrundeliegende Aufgabe, die bekannte Bremseinheit für einen Zahnstangenantrieb derart weiterzubilden, daß manuelle Arbeiten im Zusammenhang mit den Sicherheitsanforderungen entfallen und trotzdem den strengen Sicherheitsvorschriften von Berufsgenossenschaften oder des TÜV Rechnung zu tragen, die auch dann noch eine zuverlässige Sicherheit verlangen, wenn die Betriebsbremse falsch bedient oder betätigt wird oder versagen sollte.

Ein weiterer Aspekt der Aufgabenstellung ist darin zu sehen, daß kein ungebührlich großer Platzbedarf an der Werkzeugmaschine entstehen soll.

Eine Lösung dieser Aufgaben wird durch die Merkmale des Patentanspruches 1 erreicht. Es wird eine zusätzliche Bremseinheit für den Zahnstangenantrieb vorgesehen, die unabhängig von der Motorbremse am B-Lager des Antriebsmotors arbeitet und als Sicherheitsbremse ausgeführt ist: Es wird eine zweite komplette elektromagnetisch gelüftete Bremse mit einem Bremsrotor am Schlitten vorgesehen, der mit einem in die gleiche Zahnstange eingreifenden Ritzel versehen ist. Es wird also ein zweites Ritzel über oder unter oder in der Nähe des eigentlichen Antriebsritzels des Elektromotors auf der Zahnstange vorgesehen und mittels eines eigenständigen Bremsrotors einer elektromagnetisch gelüfteten Ruhestrombremse blockiert oder zur Rotation freigegeben.

Die zusätzliche Bremseinheit wird im Durchmesser möglichst klein gehalten, damit nicht zu viel freie Hublänge verloren geht.

Vorzugsweise kann diese Einheit in der gleichen Ebene wie der Antriebsmotor laufen, damit beide Zahnritzel zur Zahnstange den gleichen Achsabstand haben.

Ein Ausführungsbeispiel der vorliegenden Erfindung wird unter Bezugnahme auf die beigefügten Zeichnungen näher beschrieben. Darin zeigt die
- Fig. 1: in sehr schematischer Darstellung eine Möglichkeit des grundsätzlichen Aufbaus des Schlittens, der sich an der Zahnstange entlang vertikal bewegt und mit einer erfindungsgemäßen Bremseinheit versehen ist;
- Fig. 2: eine bevorzugte Ausgestaltung der erfindungsgemäßen Bremseinheit als zusätzliche Sicherheitsbrernse für einen vertikalen Zahnstangenantrieb; und
- Fig. 3: die erfindungsgemäße Bremseinheit in einer Frontalansicht.

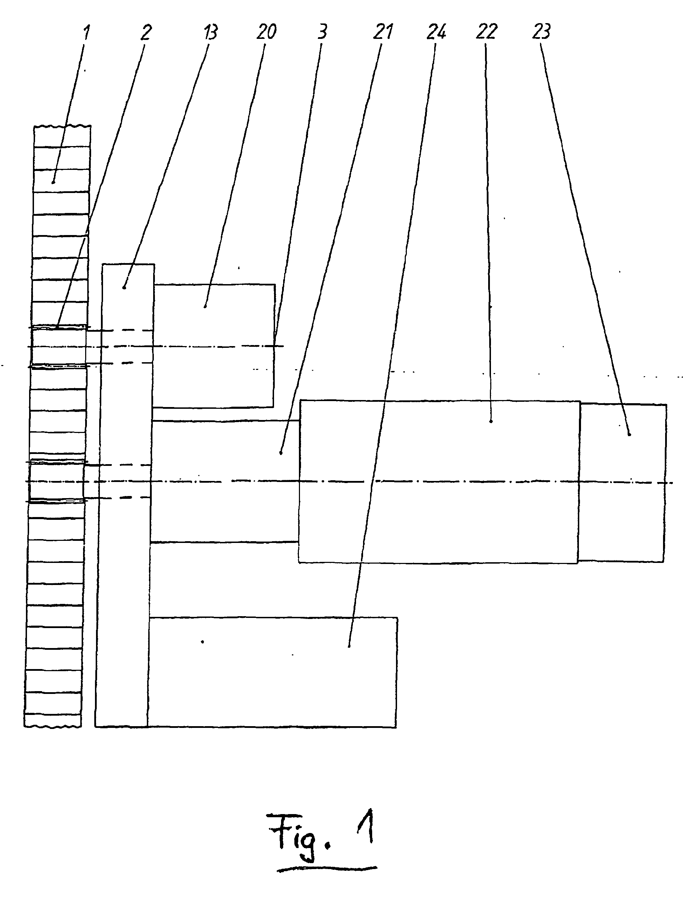

In Fig. 1 bezeichnet 1 die Zahnstange und rechts davon befindet sind der Schlitten mit dem herkömmlichen Schlittenantrieb aus Antriebsmotor 22, Bremse 23 am B-Lager und Getriebe 21, welches das Antriebsritzel des Schlittens auf der Zahnstange betreibt.

Der Schlitten 13 ist an seinem unteren Ende bei 24 mit einer Werkzeugplattform versehen, an der beispielsweise auf der Unterseite irgendwelche Bohr- oder Fräsvorrichtungen oder dergleichen angeordnet sein können, deren Vorschub in der Vertikalrichtung durch den Schlitten im Zusammenwirken mit der Zahnstange 1 bewirkt wild.

Die erfindungsgemäß vorgesehene zusätzliche komplette Bremseinheit 20 sitzt in der grundsätzlichen Ausführungsform der Fig. 1 oberhalb des herkömmlichen Antriebs 21, 22, 23 und ist mit dem Ritzel 2 verbunden, das im normalen Betrieb bei einer Verschiebung des Schlittens in vertikaler Richtung auf der Zahnstange 1 leer mitläuft.

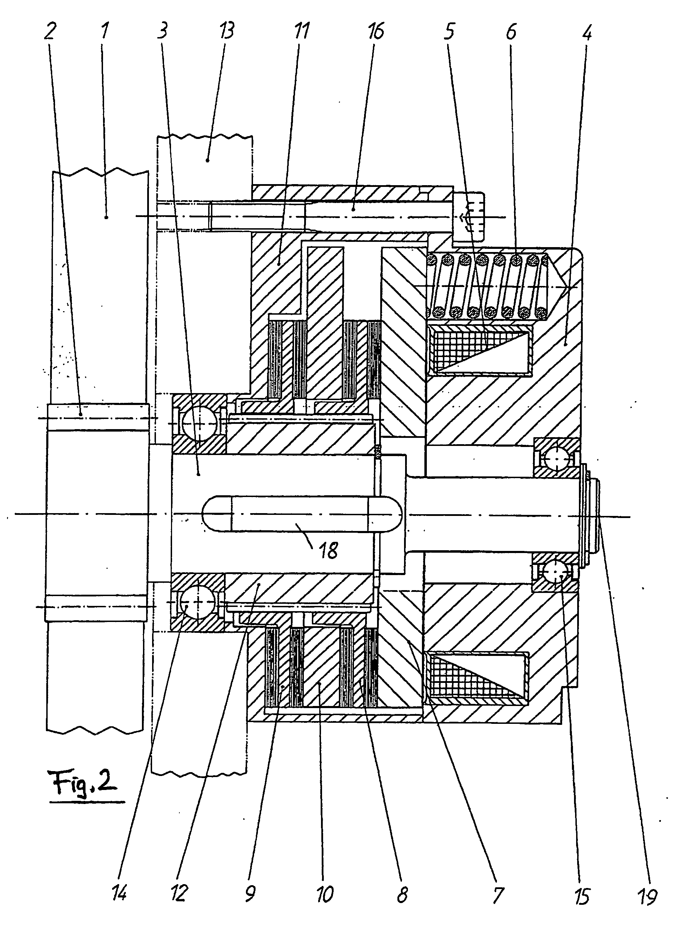

Eine mögliche Ausführungsform der kompletten zusätzlichen Bremseinheit 20 ist aus Fig. 2 ersichtlich. Es handelt sich um eine Ruhestrombremse, die im Durchmesser sehr klein ist und trotzdem ein hohes Drehmoment dadurch erreicht, daß zwei axial nebeneinander vorgesehene Bremsrotoren 8, 9 mit jeweils zwei gegenüberliegenden Reibbelägen vorgesehen sind.

Die Fig. 2 zeigt eine bevorzugte konstruktive Ausgestaltung der Bremseinheit 20, die in diesem Beispiel als Ruhestrombremse ausgestaltet ist, die mittels Befestigungsschrauben 16 am gleichen Schlitten 13 wie der Antriebsmotor 22 befestigt ist. Das Ritzel 2 läuft auf der Zahnstange 1 und ist vorzugsweise einstückig mit der Welle 3 und der Zahnnabe 12, also anders als in der Fig. 2 dargestellt, in der die Hülse der Zahnnabe 12 mittels einer Paßfeder 18 und eines Federringes auf der Welle 3 fixiert ist. Die Welle 3 wird von zwei Wälzlagern 14 und 15 gehalten, die einen größtmöglichen Abstand voneinander haben. Das Lager 14 hat einen Außendurchmesser, der größer ist als der Außendurchmesser des Ritzels 2 und sitzt in einer entsprechenden Bohrung im Schlitten 13.

Das Gehäuse 11 der Bremseinheit 20 umschließt die auf der Zahnnabe 12 sitzenden Bremsrotoren 8 und 9, die zwischen der Wand des Gehäuses einerseits und der Ankerscheibe 7 der Ruhestrombremse andererseits und einer zwischen beiden vorgesehenen, drehfest installierten Zwischenscheibe 10 umlaufen. Der Spulenträger 4 der Bremse ist in herkömmlicher Weise aufgebaut, d. h. er weist die konzentrische Spule 5 und die auf dem Umfang verteilten Druckfedern 6 auf, die bei ausbleibendem Strom die Ankerscheibe 7 gegen die Rotoren 8 und 9 drücken. Ein besonderer Aspekt des Spulenträgers 4 ist allerdings die Tatsache, daß das Lager 15 an der am weitest möglich äußeren Stelle des Spulenträgers angeordnet ist, um die Welle 3 so stabil wie möglich zu lagern.

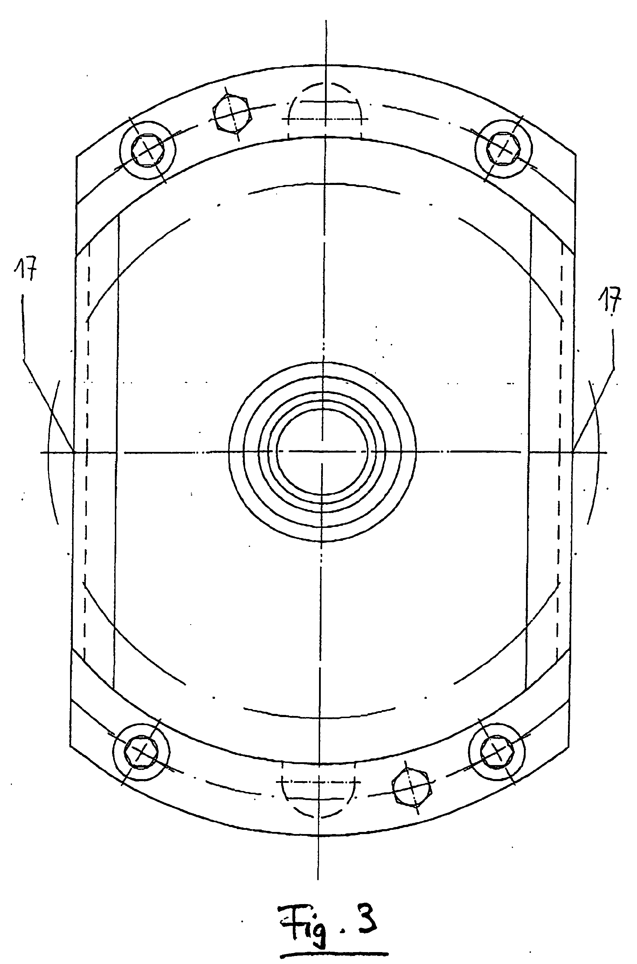

An der Bauhöhe der Ruhestrombremse 20 kann dadurch eingespart werden, daß man die Bremse an zwei gegenüberliegenden Stellen 17 abfräst und somit vertikale Hublänge spart, d. h. die komplette Bremseinheit 20 kann näher an die eigentliche Antriebseinheit 21, 22, 23 heranrücken, als dies sonst der Fall wäre. Dieser Aspekt geht aus der Fig. 3 hervor.

Um das im normalen Betrieb leer mitlaufende Zahnritzel 2 der Bremseinheit 20 vernünftig zu lagern, wird am entgegengesetzten entfernten Ende des Spulenträgers der Bremse, also auf deren Rückseite, ein Lager 15 oder ein Wälzlager eingebaut, was zusammen mit dem vorderen Lager 14 einen besonders breiten Achsabstand ergibt, so daß das Ritzel 2 die entstehenden Kräfte beim Bremsen aufnehmen kann.

Als weitere Variante ist denkbar, daß die Zahnnabe 12 der Bremse und das Ritzel für die Zahnstange aus einem Teil gemacht werden können und das entsprechende Lager 14 im Durchmesser somit einfach größer gewählt werden muß. Somit kann man sich eine zusätzliche Passfeder 18 zur Drehmomentübertragung sparen.

Als weitere Variante ist möglich, die Bremse in pneumatischer oder hydraulischer Ausführung auszuführen.

Des weiteren besteht die Möglichkeit, anstelle von zwei Bremsrotoren mehrere derartiger Rotoren nach Art einer Lamellenbremse zur Bremsmomenterhöhung zu verwenden.

Als weitere wichtige Variante ist denkbar, das Ritzel 2 der Bremseinheit 20 zu einem Viertel seiner Breite als Ölfilz auszubilden, um die Schmierung der Zahnstange zu erreichen. Dabei kann das erforderliche Schrnieröl über eine Drehdurchführung durch die Mitte der Welle 3 an dem Wellenspiegel 19 zugeführt werden.

### Bezugszeichenliste

- 1: Zahnstange
- 2: Ritzel
- 3: Welle (mit angebautem Ritzel 2 - einstückig)
- 4: Spulenträger/Bremse
- 5: Spule/Bremse
- 6: Feder
- 7: Ankerscheibe
- 8: Rotor 1
- 9: Rotor 2
- 10: Zwischenscheibe
- 11: Gehäuse
- 12: Zahnnabe
- 13: Schlitten (Werkzeugschlitten, Flansch, Gehäusewand oder ähnliches)
- 14: 1. Lager
- 15: 2. Lager (eingebaut in Bremsenrückseite)
- 16: Befestigungsschrauben
- 17: Abflachung (Abfräsung)
- 18: Passfeder
- 19: Anbringung einer Bohrung für Drehdurchführung zur Schmierung
- 20: Komplette Bremseinheit
- 21: Getriebe
- 22: Antriebsmotor
- 23: Bremse
- 24: Werkzeugplattform am Schlitten / Halterung für Bohr-/Fräswerkzeug

## Patentansprüche

1. Antriebsanordnung für einen vorzugsweise vertikal verfahrbaren Schlitten (13), mit einer entsprechend angeordneten stationären Zahnstange (1), deren zugehöriges Ritzel von einem auf dem Schlitten vorgesehenen Antriebsmotor (22) mit einer Ruhestrombremse (23) am B-Lagerschild und über ein Getriebe (21) zur vertikalen Bewegung des Schlittens (13) betreibbar ist, wobei eine zusätzliche Schlitten-Haltevorrichtung bei Bedarf zur Absicherung des vertikal verfahrbaren Schlittens (13) in Eingriff bringbar ist und wobei die zusätzliche Haltevorrichtung als eine zusätzliche Bremseinheit (20) mit einem Bremsgehäuse (11) und Bremsvotor (8 und/oder 9) am Schlitten (13) angeordnet und zum Schlitten (13) angeordnet und zum Eingriff eines eigenen auf einer Welle (3) sitzenden Ritzels (2) in die Zahnstange (1) ausgebildet ist, das bei den normalen Verstellbewegungen des Schlittens (13) leer mitläuft, wobei die Bremseinheit (20) unabhängig von der Ruhestrombremse (23) des Antriebsmotors (22) betätigbar ist, **dadurch gekennzeichnet, daß** die Welle (3) des Ritzels (2), welches direkt im Eingriff mit der Zahnstange (1) steht, zugleich die des Bremsrotors (8 und/oder 9) ist und von Lagern (14, 15) abgestützt wird, die jeweils an den voneinander abgewandten/entfernten Seitenflächen des Bremsgehäuses (11) bzw. eines Spulenträgergehäuses (4) angeordnet sind zum Erreichen eines größtmöglichen Lagerabstandes.

2. Antriebsanordnung nach Anspruch 1, **dadurch gekennzeichnet, daß** die Bremseinheit (20) als elektromagnetische Ruhestrombremse (4, 5, 6, 7) ausgebildet ist.

3. Antriebsanordnung nach Anspruch 1 oder 2, **dadurch gekennzeichnet, daß** die Bremseinheit (20) pneumatisch oder hydraulisch betätigt ist.

4. Antriebsanordnung nach einem der voranstehenden Ansprüche, **dadurch gekennzeichnet, daß** das Lager (14) im Durchmesser größer als eine Zahnnabe (12) der Bremse ist und somit Welle (3) und Zahnnabe (12) einteilig ausgestaltet sind.

5. Antriebsanordnung nach einem der voranstehenden Ansprüche, **dadurch gekennzeichnet, daß** zwei oder mehrere Bremsrotoren oder -lamellen in der Bremseinheit (20) vorgesehen sind.

6. Antriebsanordnung nach einem der voranstehenden Ansprüche, **dadurch gekennzeichnet, daß** das Ritzel der Bremseinheit (20) auf einem Teil seiner axialen Länge aus Filz zu Zwecken der Schmierung der Zahnstange ausgebildet ist.

7. Antriebsanordnung nach Anspruch 6, **dadurch gekennzeichnet, daß** die Welle (3) des Ritzels (2) mit einer Drehdurchführung am Wellenspiegel (19) zum Heranführen von Schmiermittel zum Filz des Ritzels (2) ausgebildet ist.

8. Antriebsanordnung nach einem der voranstehenden Ansprüche, **dadurch gekennzeichnet, daß** die Bremseinheit (20) zur Verringerung ihrer Bauhöhe, d. h. ihres Abstandes von dem auf dem Schlitten (13) vorgesehenen Antriebsmotor (22), mit zwei gefrästen parallelen Abflachungen (17, Fig. 3) versehen ist.

## Revendications

1. Dispositif d'entraînement pour un chariot (13) déplaçable de préférence verticalement, comprenant une crémaillère (1) stationnaire disposée en conséquence, dont le pignon correspondant peut être actionné par un moteur d'entraînement (22) prévu sur le chariot avec un frein à courant de repos (23) sur le palier B et par l'intermédiaire d'une transmission (21) pour le déplacement vertical du chariot (13), un dispositif de retenue supplémentaire du chariot pouvant être amené en prise en cas de besoin pour protéger le chariot (13) déplaçable verticalement et le dispositif de retenue supplémentaire étant disposé sous forme d'une unité de freinage supplémentaire (20) comprenant un carter de frein (11) et un rotor de frein (8 et/ou 9) sur le chariot (13) et étant configuré pour la prise d'un pignon propre (2) monté sur un arbre (3), dans la crémaillère (1), lequel pignon tourne à vide lors de mouvements de déplacement normaux du chariot (13), l'unité de freinage (20) pouvant être commandée indépendamment du frein à courant de repos (23) du moteur d'entraînement (22), **caractérisé en ce que** l'arbre (3) du pignon (2), qui est directement en prise avec la crémaillère (1), est en même temps celui du rotor de frein (8 et/ou 9) et est supporté par des paliers (14, 15) qui sont disposés chacun sur les surfaces latérales mutuellement opposées/éloignées du carter de frein (11) ou d'un boîtier porte-bobines (4) pour obtenir un écartement maximal des paliers.

2. Dispositif d'entraînement suivant la revendication 1, **caractérisé en ce que** l'unité de freinage (20) est réalisée sous forme de frein à courant de repos électromagnétique (4, 5, 6, 7).

3. Dispositif d'entraînement suivant l'une des revendications 1 et 2, **caractérisé en ce que** l'unité de freinage (20) est à commande pneumatique ou hydraulique.

4. Dispositif d'entraînement suivant l'une des revendications précédentes, **caractérisé en ce que** le palier (14) est plus grand en son diamètre qu'un moyeu denté (12) du frein et l'arbre (3) et le moyeu denté (12) sont ainsi configurés d'une seule pièce.

5. Dispositif d'entraînement suivant l'une des revendications précédentes, **caractérisé en ce que** deux rotors ou lamelles de frein, ou plus, sont prévus dans l'unité de freinage (20).

6. Dispositif d'entraînement suivant l'une des revendications précédentes, **caractérisé en ce que** le pignon de l'unité de freinage (20) est réalisé en feutre sur une partie de sa longueur axiale à des fins de lubrification de la crémaillère.

7. Dispositif d'entraînement suivant la revendication 6, **caractérisé en ce que** l'arbre (3) du pignon (2) est réalisé avec un passage tournant sur le bout d'arbre (19) pour l'amenée de lubrifiant au feutre du pignon (2).

8. Dispositif d'entraînement suivant l'une des revendications précédentes, **caractérisé en ce que** l'unité de freinage (20) est munie de deux méplats parallèles fraisés (17, figure 3) pour réduire sa hauteur de construction, c'est-à-dire sa distance par rapport au moteur d'entraînement (22) prévu sur le chariot (13).

## Claims

1. Drive arrangement for a preferably vertically traversable slide (13), comprising a correspondingly arranged stationary toothed rack (1), the associated pinion of which can be operated by a drive motor (22), provided on the slide and having a fail-safe brake (23) at the non-drive end shield, and via a gear unit (21) for the vertical movement of the slide (13), it being possible for an additional slide-holding device to be brought into engagement if required for protecting the vertically traversable slide (13), and the additional holding device being arranged as an additional brake unit (20), having a brake housing (11) and brake rotor (8 and/or 9), on the slide (13) and being designed for the engagement of a separate pinion (2) with the toothed rack (1), this pinion (2) sitting on a shaft (3) and idling during the normal adjusting movements of the slide (13), the brake unit (20) being actuable independently of the fail-safe brake (23) of the drive motor (22), **characterized in that** the shaft (3) of the pinion (2), which is directly in engagement with the toothed rack (1), is at the same time that of the brake rotor (8 and/or 9) and is supported by bearings (14, 15) which are in each case arranged on the remote side faces, the side faces facing away from one another, of the brake housing (11) and of a coil-carrier housing (4), respectively, for achieving as large a distance between the bearings as possible.

2. Drive arrangement according to Claim 1, **characterized in that** the brake unit (20) is designed as an electromagnetic fail-safe brake (4, 5, 6, 7)

3. Drive arrangement according to Claim 1 or 2, **characterized in that** the brake unit (20) is actuated pneumatically or hydraulically.

4. Drive arrangement according to one of the preceding claims, **characterized in that** the bearing (14) is larger in diameter than a toothed hub (12) of the brake, and thus shaft (3) and toothed hub (12) are designed in one piece.

5. Drive arrangement according to one of the preceding claims, **characterized in that** two or more brake rotors or discs are provided in the brake unit (20).

6. Drive arrangement according to one of the preceding claims, **characterized in that** the pinion of the brake unit (20) is formed from felt over part of its axial length for the purposes of lubricating the toothed rack.

7. Drive arrangement according to Claim 6, **characterized in that** the shaft (3) of the pinion (2) is formed with a rotary transmission leadthrough at the shaft end face (19) for feeding lubricant to the felt of the pinion (2).

8. Drive arrangement according to one of the preceding claims, **characterized in that** the brake unit (20), for reducing its overall height, i.e. its distance from the drive motor (22) provided on the slide (13), is provided with two milled parallel flats (17, Fig. 3).
